# NEUE EUROPÄISCHE PATENTSCHRIFT

(11) **EP 3 571 676 B2**
(45) Veröffentlichungstag und Bekanntmachung des Hinweises auf die Entscheidung über den Einspruch: **26.08.2026**
(45) Hinweis auf die Patenterteilung: 08.12.2021
(21) Anmeldenummer: 18706212.0
(22) Anmeldetag: 06.02.2018
(51) Int. Cl.: G07C 9/00, E05B 81/78, E05B 85/16, H01Q 1/32

(54) **AUTHENTIFIZIERUNGSSYSTEM EINES FAHRZEUGS**
VEHICLE AUTHENTICATION SYSTEM
SYSTÈME D'AUTHENTIFICATION D'UN VÉHICULE

(30) Priorität: 28.04.2017 DE 102017109294; 10.05.2017 DE 102017110144
(43) Veröffentlichungstag der Anmeldung: 27.11.2019
(73) Patentinhaber: Huf Hülsbeck & Fürst GmbH & Co. KG, 42551 Velbert (DE)
(72) Erfinder: NEUHOFF, Stefan, 45239 Essen (DE); SCHINDLER, Mirko, 42549 Velbert (DE)
(74) Vertreter: Zenz Patentanwälte Partnerschaft mbB
(86) Internationale Anmeldenummer: PCT/EP2018/052954
(87) Internationale Veröffentlichungsnummer: WO 2018/197065

(56) Entgegenhaltungen:
- EP-A1- 1 473 426
- EP-A2- 2 800 068
- EP-A2- 3 031 676
- DE-A1- 102016 007 410
- DE-A1- 102016 208 293
- US-A1- 2003 001 729
- US-A1- 2016 059 827

## Beschreibung

Die Erfindung betrifft ein Authentifizierungssystem, mit welchem eine Authentifizierung eines portablen ID-Gebers gegenüber dem Fahrzeug vorgenommen werden kann, um Fahrzeugfunktionen für einen Bediener freizugeben, der den portablen ID-Geber mit sich führt.

Aus dem Stand der Technik sind unterschiedliche sogenannte schlüssellose Zugangssysteme bekannt. Diese basieren auf der Kommunikation einer fahrzeugseitigen Infrastruktur mit einem portablen ID-Geber über Funk. Im Rahmen der durchgeführten Funkkommunikation wird die angestrebte Authentifizierung vorgenommen, beispielsweise durch Austausch und Prüfung verschlüsselter Berechtigungsdaten.

Im Bereich der schlüssellosen Zugangssysteme ist die Nutzung niederfrequenter (LF) sowie hochfrequenter (HF) Funkwellen bekannt und vielfach verwendet. Auch die kombinierte Kommunikation mittels LF-/HF-Systemen ist aus dem Stand der Technik bekannt.

Bei funkbasierten Berechtigungssystemen ist die Sicherheit, insbesondere vor Kompromittierung der durchgeführten Funkkommunikation, von entscheidender Bedeutung. Im Rahmen der Freigabe einer Fahrzeugfunktion unter Nutzung portabler ID-Geber ist die Bestimmung einer Position, eines Abstands oder einer ähnlichen Größe, beispielsweise zur Plausibilisierung der durchgeführten bidirektionalen Kommunikation, aus dem Stand der Technik bekannt. Beispielsweise ist bekannt, die Signalstärke einer LF-Funkkommunikation zwischen portablem ID-Geber und einer fahrzeugseitigen Authentifizierungsanordnung auszuwerten. Ein ergänzendes oder alternativ vorgesehenes Konzept zur Erhöhung der Sicherheit vor Kompromittierung kann schlicht darauf beruhen, dass die Sendeleistung einer LF-Kommunikation begrenzt wird. Durch Begrenzung der Sendeleistung einer LF-Kommunikation zwischen Fahrzeug und ID-Geber wird sichergestellt, dass beispielsweise ein LF-Wecksignal, welches von dem Fahrzeug zu dem ID-Geber gesendet wird, nur dann von dem jeweils anderen Kommunikationspartner empfangen werden kann, wenn ein Maximalabstand zwischen ID-Geber und Fahrzeug nicht überschritten wird.

Viele der bekannten Authentifizierungssysteme weisen nach wie vor den prinzipiellen Nachteil auf, dass eine LF-Funkkommunikation oder eine HF-Funkkommunikation verlängerbar ist, beispielsweise im Rahmen sogenannter Relay-Station-Attacken. Zur Vermeidung derartiger oder anderer Kompromittierungen sind Gegenmaßnahmen erforderlich, die jedoch teilweise aufwändig sind.

Die Patentschrift EP2800068 A2 befasst sich mit der Verhinderung von Relay-Angriffen für Passiv-Eintritt/Passiv-Start (PEPS) Systeme durch Laufzeitmessungen bei der UWB-Kommunikation und einer darauf basierenden Bestimmung des Abstandes zwischen Bediener und Fahrzeug.

Es ist daher Aufgabe der Erfindung, die bekannten Authentifizierungssysteme zu verbessern, sodass sie einen wirkungsvollen, zugleich aber auch vergleichsweise unaufwändigen Schutz vor einer Kompromittierung der übermittelten Signale bereitstellen.

Die Aufgabe wird gelöst mit einem Authentifizierungssystem mit den Merkmalen des Anspruchs 1.

Das Authentifizierungssystem weist den portablen ID-Geber und eine fahrzeugseitige Authentifizierungsanordnung auf. Der portable ID-Geber weist wenigstens eine erste ID-Geber-UWB-Schnittstelle auf. Die Authentifizierungsanordnung weist wenigstens eine erste Fahrzeug-UWB-Schnittstelle und eine zweite Fahrzeug-UWB-Schnittstelle auf, die voneinander beabstandet an dem Fahrzeug angeordnet sind.

Die erste ID-Geber-UWB-Schnittstelle und die Fahrzeug-UWB-Schnittstellen sind zur UWB-Kommunikation miteinander eingerichtet. Das bedeutet, dass jede der Fahrzeug-UWB-Schnittstellen mit dem ID-Geber über dessen ID-Geber-UWB-Schnittstelle eine UWB-Kommunikation veranlassen und durchführen kann sowie die ID-Geber-UWB-Schnittstelle eine UWB-Kommunikation mit jeder der Fahrzeug-UWB-Schnittstellen veranlassen und durchführen kann.

Der Begriff der UWB-Schnittstelle bezieht sich auf eine Anordnung von Elementen, die die Voraussetzungen zur UWB-Kommunikation mit einem anderen zur UWB-Kommunikation eingerichteten Gerät erfüllt. Beispielsweise kann es sich bei einer UWB-Schnittstelle um einen UWB-Transceiver handeln, wie sie seit einiger Zeit für industrielle Anwendungen bereitstehen.

Die Beabstandung der ersten Fahrzeug-UWB-Schnittstelle von der zweiten Fahrzeug-UWB-Schnittstelle ist als der Abstand zwischen einer UWB-Antenne der ersten Fahrzeug-UWB-Schnittstelle und einer UWB-Antenne der zweiten Fahrzeug-UWB-Schnittstelle zu verstehen.

Das erfindungsgemäße Authentifizierungssystem weist aufgrund der vorgesehenen Nutzung von UWB-Kommunikation beträchtliche Vorteile auf.

Prinzipiell ist die Verwendung von Ultrabreitband-Funksignalen (UWB-Funksignalen) für manche Anwendungen aus dem Stand der Technik bekannt. Für die Nutzung stehen jedoch erst seit kurzem marktbereite Transceiver zur Verfügung.

Die Ultrabreitbandtechnologie ist in ihren Grundlagen seit Langem bekannt. Sie ist jedoch erst in jüngerer Vergangenheit, nicht zuletzt durch liberalere Regulation, für die Benutzung in weiten Anwendungsbereichen zugänglich geworden.

Bei der Ultrabreitbandtechnologie handelt es sich um eine Nahbereichs-Funkkommunikation, die auf dem Aussenden kurzer Signalpulse basiert, welche innerhalb einer großen Frequenzbandbreite eine Vielzahl von Frequenzen abdeckt. Die Breite der abgedeckten Frequenzbereiche ist insbesondere von regulatorischen Vorgaben des entsprechenden territorialen Gebiets abhängig.

Ein Nachteil der UWB-Kommunikation im Verhältnis zu der etablierten LF- und/oder HF-Kommunikation ist der bei vielen gegenwärtig verfügbaren, zur UWB-Kommunikation geeigneten Transceivern vergleichsweise hohe Energiebedarf.

Die UWB-Kommunikation weist jedoch den prinzipiellen Vorteil auf, dass aufgrund der Aussendung von Pulsen eine Entfernungsbestimmung mittels eines Laufzeit-basierten Ansatzes vorgenommen wird, worauf oft auch mit der Bezeichnung der Time-Of-Flight-Methode Bezug genommen wird. Beispielsweise kann die Entfernung zwischen der ersten UWB-Antenne und dem portablen ID-Geber ermittelt werden, indem ein UWB-Signal von der ersten UWB-Antenne zu dem portablen ID-Geber gesendet wird, ein UWB-Transceiver des portablen ID-Gebers dieses beantwortet eine mit der ersten UWB-Antenne gekoppelte Einheit, beispielsweise ein Steuermittel, das erfasste Antwortsignal auswertet. Dies geschieht unter Auswertung der vergangenen Zeit zwischen Aussenden und Empfang. Berücksichtigt werden die Strecke zu dem ID-Geber hin, die Bearbeitungszeit innerhalb des ID-Gebers und die Strecke von dem ID-Geber weg zu der ersten UWB-Antenne hin. Wenn, wie in diesem Beispiel, die Laufzeit fahrzeugseitig ausgewertet wird, muss lediglich die Bearbeitungszeit innerhalb des ID-Gebers fahrzeugseitig hinterlegt sein, sodass eine entsprechende Korrektur der fahrzeugseitig gemessenen Zeit zwischen Aussenden des UWB-Signals und Empfang der UWB-Antwort vorgenommen werden kann.

Erfahrungsgemäß ist die Genauigkeit einer derart vorgenommenen Entfernungsbestimmung auf UWB-Basis bei den üblichen vorgesehenen Größenordnungen von Entfernungen deutlich höher als es bei anderen Verfahren der Fall ist wie beispielsweise einer Signalstärkebestimmung von LF-Signalen oder der Triangulation von LF-Signalen. Die Genauigkeit liegt bei den UWB-basierten Entfernungsbestimmungen häufig in der Größenordnung von 10 bis 20 cm.

Dadurch, dass die reine Laufzeit des UWB-Signals gegenüber der Bearbeitungszeit relativ kurz ist, würde eine zusätzliche Bearbeitung des Signals, beispielsweise für eine Manipulation des Signals etwa im Rahmen einer Relay-Station-Attacke, aufgrund der unerwartet hohen Gesamtdauer zwischen Aussenden eines UWB-Signals und Eintreffen der entsprechenden Antwort erkannt werden können. Kompromittierungen, beispielsweise in der Art der beschrieben Relay-Station-Attacken, sind dadurch, wenn überhaupt, nur mit sehr aufwändigen Methoden möglich.

Ein weiterer Vorteil, der sich durch die Nutzung der UWB-Signale ergibt, besteht darin, dass aufgrund der Vielzahl der verwendeten Frequenzen eine Abschattung der Signale sehr unwahrscheinlich ist. Dies liegt darin begründet, dass zumindest für einige der gleichzeitig verwendeten Frequenzen mit hoher Wahrscheinlichkeit immer eine Sichtlinie zwischen Sender und Empfänger besteht. Ein Grund hierfür ist, dass für manche Frequenzen Beugungseffekte oder Reflektionen erwartet werden können.

Erfindungsgemäß ist vorgesehen, dass zumindest eine Antenne der Fahrzeug-UWB-Schnittstelle außerhalb der Blechummantelung des Fahrzeugs angeordnet ist.

Zusätzlich zu den erläuterten Vorteilen, die sich aus der Nutzung zweier voneinander beabstandeter Fahrzeug-UWB-Schnittstellen für die Authentifizierung eines portablen ID-Gebers an dem Fahrzeug ergeben, führt die Anordnung zumindest der Antenne der ersten Fahrzeug-UWB-Schnittstelle außerhalb der Blechummantelung des Fahrzeugs zu verbesserten Ergebnissen. Dies äußert sich darin, dass eine Beeinträchtigung des UWB-Signals zwischen ID-Geber und Fahrzeug-UWB-Schnittstelle und/oder zwischen Fahrzeug-UWB-Schnittstelle und ID-Geber deutlich reduziert wird. Dadurch, dass die UWB-Kommunikation auf dem Senden und Empfangen von Signalen mit sehr vielen Frequenzen in einem vergleichsweise weiten Frequenzspektrum beruht, würde bei einigen Frequenzen nur eine geringe Beeinträchtigung der Signale durch die Blechummantelung hervorgerufen, während andere Frequenzen sehr stark beeinträchtigt würden, insbesondere gedämpft. Die mit der Nutzung einer Vielzahl von Frequenzen einhergehende frequenzabhängig unterschiedliche Beeinträchtigung der UWB-Signale wird durch die vorgeschlagene Erfindung deutlich reduziert, wenn nicht sogar vollständig vermieden.

Vorteilhafte und/oder bevorzugte Weiterbildungen der Erfindung gehen aus den Unteransprüchen hervor.

Gemäß einer beispielhaften Ausgestaltung kann vorgesehen sein, dass die Antenne der ersten Fahrzeug-UWB-Schnittstelle in einer (bevorzugt nichtmetallischen) Dachfinne oder in einem (bevorzugt nichtmetallischen) Seitenspiegel des Fahrzeugs angeordnet ist.

Alternativ kann vorgesehen sein, dass die Antenne der ersten Fahrzeug-UWB-Schnittstelle an einem Türaußengriff oder innerhalb eines Türaußengriffs angeordnet ist, der bevorzugt einen nichtmetallischen Gehäusebereich aufweist, besonders bevorzugt vollständig nichtmetallisch ausgebildet ist. Die Anordnung der Fahrzeug-UWB-Schnittstelle an einem Türaußengriff oder innerhalb eines Türaußengriffs geht mit dem Vorteil einher, dass die heutzutage üblicherweise in dem Türaußengriff vorhandene Elektronik teilweise oder vollständig mitgenutzt werden kann, um die Fahrzeug-UWB-Schnittstelle mit der Fahrzeugelektronik zu verbinden. Ferner wird die Möglichkeit bereitgestellt, die erste Fahrzeug-UWB-Schnittstelle gemeinsam mit weiterer Elektronik, beispielsweise mit einer vorhandenen LF-Schnittstelle oder einer kapazitiven und/oder induktiven Elektronik als ein gemeinschaftliches Modul für einen Türaußengriff oder innerhalb eines Türaußengriffs bereitstellen zu können. Ein weiterer Vorteil der vorgeschlagenen Anordnung der ersten Fahrzeug-UWB-Schnittstelle innerhalb eines Türaußengriffs besteht darin, dass bei zusätzlicher Anordnung einer weiteren Funkeinheit, beispielsweise einer LF-Schnittstelle, innerhalb des Türaußengriffs die Signallaufzeit sowohl für UWB-Signale als auch für LF-Signale in Relation zu dem Türaußengriff identisch ist. Dadurch können Zeitversätze ausgeschlossen werden und eine Optimierung der Auswertung der Funkkommunikation, beispielsweise durch eine zentrale Steuereinheit des Fahrzeugs, kann erfolgen.

Ein weiterer Vorteil der Anordnung der ersten Fahrzeug-UWB-Schnittstelle an einem Türaußengriff oder innerhalb eines Türaußengriffs besteht darin, dass ein Bediener, der einen Zutritt zu einem Fahrzeug anstrebt, sich hierfür üblicherweise zu dem Türaußengriff hinbewegt. Dadurch ist Funkkommunikation zwischen dem ID-Geber, der in Besitz des Bedieners ist, und der ersten Fahrzeug-UWB-Schnittstelle insoweit positiv beeinflusst, dass eine Beeinträchtigung, beispielsweise durch abschattende Objekte, mit hoher Wahrscheinlichkeit nicht vorliegt.

In einer speziellen Ausgestaltung kann vorgesehen sein, dass der Türaußengriff entlang seiner Längserstreckung
- einen Scharnierbereich aufweist, in welchem der Türaußengriff mit einer Seitentür des Fahrzeugs schwenkverbunden ist,
- einen Greifbereich aufweist, der zum Hintergreifen des Türaußengriffs durch den Bediener ausgebildet ist und
- einen Schwenkbereich aufweist.

Mit anderen Worten ist eine Ausgestaltung des Türaußengriffs vorgesehen, welche einen Greifbereich aufweist, der auf einer Seite des Greifbereichs mit einem Scharnierbereich und auf der anderen Seite des Greifbereichs mit einem Schwenkbereich verbunden ist. Der Greifbereich ist dabei der Bereich, der von dem Bediener hintergriffen wird, um den Türaußengriff zu betätigen. Es kann vorgesehen sein, dass die Antenne der ersten Fahrzeug-UWB-Schnittstelle in dem Scharnierbereich oder in dem Schwenkbereich angeordnet ist. Durch diese Anordnung der Antenne wird wirkungsvoll vermieden, dass Sende- und/oder Empfangsaktivitäten der Antenne der ersten Fahrzeug-UWB-Schnittstelle abgeschattet werden, wenn der Bediener den Türaußengriff zur Betätigung hintergreift.

In einer speziellen Weiterbildung der Erfindung kann vorgesehen sein, dass die erste Fahrzeug-UWB-Schnittstelle als UWB-Transceiver ausgebildet ist, der innerhalb des Türaußengriffs angeordnet ist. Der so ausgebildete UWB-Transceiver ist mit einem ersten Näherungssensor gekoppelt. Ferner ist ein erstes Steuermittel vorgesehen, mit welchem sowohl die erste Fahrzeug-UWB-Schnittstelle als auch der erste Näherungssensor gekoppelt sind. Das erste Steuermittel ist eingerichtet, die erste Fahrzeug-UWB-Schnittstelle anzusteuern und in einen kommunikationsbereiten Modus zu versetzen, nachdem der Näherungssensor eine Annäherung eines Bedieners festgestellt hat.

Um das Ansteuern der ausgewählten UWB-Antenne technisch zu realisieren, kann beispielsweise vorgesehen sein, dass der erste UWB-Transceiver mit der ersten UWB-Antenne in einem nicht sendeund empfangsbereiten Zustand befindlich ist, und dass das erste Steuermittel den UWB-Transceiver ansteuert, um die UWB-Antenne des UWB-Transceivers in einen empfangsbereiten Zustand zu versetzen. Alternativ kann auch vorgesehen sein, dass das fahrzeugseitige Steuergerät die UWB-Antenne in analoger Weise in einen sendebereiten Zustand versetzt und das Versenden des erwähnten UWB-Signals über die ausgewählte UWB-Antenne veranlasst.

Wesentlich ist, dass vorgesehen ist, dass die erste Fahrzeug-UWB-Schnittstelle in Abhängigkeit davon in den kommunikationsbereiten Modus versetzt wird, dass der Näherungssensor eine Annäherung des Bedieners festgestellt hat. Durch diese funktionelle Kopplung des Näherungssensors mit der Sendebereitschaft und/oder Empfangsbereitschaft der ersten Fahrzeug-UWB-Schnittstelle wird erreicht, dass der Zeitraum, in welchem ein energieintensiver Betrieb der ersten Fahrzeug-UWB-Schnittstelle vorliegt, reduziert wird und eingeschränkt wird auf Situationen, in denen die Funktion der Fahrzeug-UWB-Schnittstelle auch mit vergleichsweise hoher Wahrscheinlichkeit tatsächlich benötigt wird.

Insbesondere ist gemäß einer Ausgestaltung vorgesehen, dass der erste Näherungssensor innerhalb des Türgriffs angeordnet ist. Beispielsweise kann es sich bei dem ersten Näherungssensor um einen NFC-Sensor, einen kapazitiven Sensor oder einen induktiven Schalter handeln. Aber auch optische Sensoren, wie beispielsweise Time-Of-Flight-Kameras, können vorgesehen sein. Insbesondere der kapazitive Sensor und der induktive Sensor weisen dabei den Vorteil auf, dass diese bei vielen derzeit bereits erhältlichen Türaußengriffen vorgesehen sind, sodass auf bereits vorhandene Entwicklungsergebnisse und Erfahrungen zurückgegriffen werden kann. Das Vorsehen eines NFC-Sensors, insbesondere eines NFC-Transceivers, geht mit dem Vorteil einher, dass die NFC-Funktionalität genutzt werden kann, um zur Verbesserung der Berechtigungsprüfung beizutragen, beispielsweise im Zusammenhang mit einem eigens hierfür vorgesehenen NFC-Chip, welchen der Bediener mit sich trägt oder mit einem NFC-Chip, welcher Bestandteil des ID-Gebers ist. Auch eine Kombination aus NFC-Sensor, kapazitivem Sensor, optischem Sensor und/oder induktiven Schalter ist denkbar.

Gemäß einer anderen Weiterbildung der Erfindung kann vorgesehen sein, dass die zweite Fahrzeug-UWB-Schnittstelle mit einem zweiten Näherungssensor gekoppelt ist. Gemäß dieser Ausgestaltung ist ferner vorgesehen, dass die zweite Fahrzeug-UWB-Schnittstelle und der zweite Näherungssensor mit dem ersten Steuermittel und/oder mit einem zweiten Steuermittel gekoppelt sind. Das Steuermittel, also entweder das erste Steuermittel, das zweite Steuermittel oder sowohl das erste Steuermittel als auch das zweite Steuermittel, ist bzw. sind eingerichtet, die zweite Fahrzeug-UWB-Schnittstelle anzusteuern und in einen kommunikationsbereiten Modus zu versetzen, nachdem der zweite Näherungssensor eine Annäherung des Bedieners festgestellt hat.

Insbesondere dann, wenn sowohl die erste Fahrzeug-UWB-Schnittstelle mit dem ersten Näherungssensor gekoppelt ist und die zweite Fahrzeug-UWB-Schnittstelle mit dem zweiten Näherungssensor gekoppelt ist, wird eine

Authentifizierungsanordnung bereitgestellt, in welcher jeder der ersten und der zweiten Fahrzeug-UWB-Schnittstellen jeweils ein Näherungssensor zugeordnet ist. Dadurch kann, je nachdem, von welcher Seite aus bzw. an welche Position hin ein Bediener sich dem Fahrzeug nähert, eine Auswahl getroffen werden, welche der vorhandenen Fahrzeug-UWB-Schnittstellen für eine Kommunikation in Betracht gezogen wird und für diesen Zweck in einen kommunikationsbereiten Modus versetzt wird.

Gemäß einer Weiterbildung kann vorgesehen sein, dass das mit der ersten Fahrzeug-UWB-Schnittstelle gekoppelte erste Steuermittel eingerichtet ist, nach einem Feststellen des Annäherns eines Bedieners an den ersten Annäherungssensor die erste Fahrzeug-UWB-Schnittstelle anzusteuern, ein UWB-Signal auszugeben zur UWB-Kommunikation mit der ID-Geber-UWB-Schnittstelle. Das Steuermittel ist zu diesem Zweck mit einem Speichermittel verbunden, auf dem zur Kommunikation mit der ID-Geber-UWB-Schnittstelle erforderliche Informationen hinterlegt sind. Auch zur Identifizierung erforderliche Informationen können auf dem Speichermittel hinterlegt sein. Nach Empfang eines in Reaktion erhaltenen UWB-Signals der ID-Geber-UWB-Schnittstelle veranlasst das Steuermittel, dass eine Laufzeit des UWB-Signals zwischen der ID-Geber-UWB-Schnittstelle und der Antenne der ersten Fahrzeug-UWB-Schnittstelle erfasst wird. Vorzugsweise handelt es sich bei dieser Laufzeit um die Laufzeit von der ersten Fahrzeug-UWB-Schnittstelle zur ID-Geber-UWB-Schnittstelle und von dieser wieder zurück. Ferner ist das mit der zweiten Fahrzeug-UWB-Schnittstelle gekoppelte Steuermittel eingerichtet, nach Feststellen des Annäherns eines Bedieners an den zweiten Annäherungssensor die zweite Fahrzeug-UWB-Schnittstelle anzusteuern, dass ein UWB-Signal von der zweiten Fahrzeug-UWB-Schnittstelle ausgegeben wird zur UWB-Kommunikation mit der ID-Geber-UWB-Schnittstelle, die dem Steuermittel bekannt ist. Nach Empfang eines in Reaktion erhaltenen UWB-Signals der ID-Geber-UWB-Schnittstelle wird eine Laufzeit des UWB-Signals zwischen der ID-Geber-UWB-Schnittstelle und einer Antenne der zweiten Fahrzeug-UWB-Schnittstelle erfasst, bevorzugt die Gesamtlaufzeit des Hinwegs (von der zweiten Fahrzeug-UWB-Schnittstelle zum ID-Geber) und des Rückwegs (von dem ID-Geber zur Fahrzeug-UWB-Schnittstelle).

Es wird also sichergestellt, dass in Abhängigkeit davon, welcher der beiden Annäherungssensoren eine Annäherung eines Bedieners erfasst, eine Fahrzeug-UWB-Schnittstelle ausgewählt wird, welche eine Ermittlung der Entfernung des ID-Gebers mittels einer UWB-Kommunikation zwischen Fahrzeug-UWB-Schnittstelle und ID-Geber durchführt. Erfindungsgemäß ist vorgesehen, dass die erste Fahrzeug-UWB-Schnittstelle und die zweite Fahrzeug-UWB-Schnittstelle mit einem zentralen Steuermittel gekoppelt sind und/oder dass das erste Steuermittel als zentrales Steuermittel ausgebildet ist. Das zentrale Steuermittel kann dabei beispielsweise ein Bestandteil eines der UWB-Transceiver sein, ein eigens hierfür vorgesehener Mikrocontroller oder auch ein Teil eines fahrzeugseitigen Steuergeräts. Das zentrale Steuermittel ist ausgebildet, nach Erfassen der Laufzeit des UWB-Signals zwischen der ID-Geber-UWB-Schnittstelle und der ersten Fahrzeug-UWB-Schnittstelle mittels des ersten Steuermittels zu prüfen, ob die Laufzeit des UWB-Signals kleiner ist als eine vorgegebene Maximallaufzeit, welche eine Position des ID-Gebers innerhalb einer vorgegebenen Umgebung repräsentiert, welche die erste Fahrzeug-UWB-Schnittstelle umgibt. Ferner ist das Steuermittel eingerichtet, in einem Fall, in dem die Laufzeit größer ist als die vorgegebene Maximallaufzeit, für eine vorgegebene Anzahl von Wiederholungen und in einer vorgegebenen Anzahl von Zeitfolgen wiederholt die erste Fahrzeug-UWB-Schnittstelle anzusteuern, dass diese ein UWB-Signal ausgibt. Dadurch wird eine wiederholte Laufzeiterfassung zwischen der ID-Geber-UWB-Schnittstelle und der ersten Fahrzeug-UWB-Schnittstelle vorgenommen mit dem Ziel, False-Positive-Ergebnisse weitgehend oder vollständig vermeiden zu können. Ferner ist das zentrale Steuermittel eingerichtet, wenn die vorgegebene Anzahl von Wiederholungen der Laufzeiterfassungen unter Nutzung der ersten Fahrzeug-UWB-Schnittstelle durchgeführt wurde, die zweite Fahrzeug-UWB-Schnittstelle anzusteuern, dass die zweite Fahrzeug-UWB-Schnittstelle ein UWB-Signal aussendet zur Kommunikation der zweiten Fahrzeug-UWB-Schnittstelle mit der ID-Geber-UWB-Schnittstelle zur Laufzeiterfassung zwischen der ID-Geber-UWB-Schnittstelle und der zweiten Fahrzeug-UWB-Schnittstelle.

Es ist also vorgesehen, in einem Fall, in dem mit der ersten Fahrzeug-UWB-Schnittstelle keine erfolgreiche Ermittlung der Position des ID-Gebers innerhalb der vordefinierten Umgebung ermittelt wird, eine Entfernungsermittlung unter Verwendung der zweiten Fahrzeug-UWB-Schnittstelle vorzusehen. Daraus ergibt sich der Vorteil, dass bei unplanmäßiger Beeinträchtigung der Sende- und/oder Empfangsaktivitäten der ersten Fahrzeug-UWB-Schnittstelle, beispielsweise in dem unwahrscheinlichen Fall einer Abschirmung, dennoch die Funktionsweise des Gesamtsystems gewährleistet bleibt.

Ein Beispiel eines Authentifizierungssystems kann ferner vorsehen, dass das mit der ersten Fahrzeug-UWB-Schnittstelle gekoppelte erste Steuermittel mit einer Fahrzeug-LF-Schnittstelle gekoppelt ist und dass der ID-Geber eine ID-Geber-LF-Schnittstelle aufweist. Das bedeutet, dass sowohl das Fahrzeug als auch der ID-Geber eingerichtet sind, miteinander mittels LF-Kommunikation einen Datenaustausch zu betreiben. Dabei ist vorgesehen, dass das erste Steuermittel eingerichtet ist, nach Feststellen des Annäherns eines Bedieners an den ersten Annäherungssensor die Fahrzeug-LF-Schnittstelle anzusteuern, ein Wecksignal an den ID-Geber auszusenden sowie die erste Fahrzeug-UWB-Schnittstelle anzusteuern zum Versetzen der ersten Fahrzeug-UWB-Schnittstelle aus einem nicht sende- und/oder empfangsbereiten Zustand in einen zumindest empfangsbereiten Zustand. Ferner ist das erste Steuermittel eingerichtet oder die erste Fahrzeug-UWB-Schnittstelle selbst eingerichtet, ein von dem ID-Geber aus gesendetes UWB-Signal mit einem UWB-Antwortsignal zu beantworten. Ferner ist der ID-Geber eingerichtet, mittels eines Steuermittels des ID-Gebers, insbesondere mittels eines mit der ID-Geber-UWB-Schnittstelle gekoppelten Mikrocontrollers, eine Laufzeit des UWB-Signals und des UWB-Antwortsignals zwischen ID-Geber und erster Fahrzeug-UWB-Schnittstelle zu erfassen, und die Laufzeit oder einen aus ihr abgeleiteten Parameter mittels einer Funkeinrichtung an einen Datenempfänger des Fahrzeugs zu übermitteln. Bei der Funkeinrichtung kann es sich beispielsweise um die ID-Geber-LF-Schnittstelle oder um die ID-Geber-UWB-Schnittstelle handeln. Bei dem Datenempfänger des Fahrzeugs kann es sich beispielsweise um die Fahrzeug-LF-Schnittstelle oder um die erste Fahrzeug-UWB-Schnittstelle handeln. Gemäß dieser Ausgestaltung kann also vorgesehen sein, dass die Entfernungsermittlung gestartet wird mit dem Aussenden eines UWB-Signals von dem ID-Geber aus, einer hierauf erfolgenden Antwort der fahrzeugseitigen Fahrzeug-UWB-Schnittstelle mit einem Antwort-UWB-Signal, welches der ID-Geber empfängt und auf seine Laufzeit hin auswertet. Die Entfernungsermittlung wird gemäß dieser Alternative von dem ID-Geber vorgenommen. Die vorgenommene Entfernungsermittlung wiederum wird ausgelöst durch ein ausgesendetes LF-Signal, welches der ID-Geber empfängt. Vorteil dieser Vorgehensweise ist, dass das Aussenden eines LF-Signals von einer fahrzeugseitigen Instanz aus zu einem ID-Geber hin und ein daraufhin erfolgendes Aufwecken einer ID-Geberseitigen Schaltung infolge des Empfangs des LF-Signals bereits bei gegenwärtig erhältlichen sogenannten schlüssellosen Authentifizierungssystemen üblich ist, sodass das vorgeschlagene Authentifizierungssystem in dieser Weiterbildung durch vergleichsweise geringe Modifikationen bereits bekannter Lösungen bereitgestellt werden kann.

Ferner kann beispielsweise vorgesehen sein, dass wenn die Laufzeit größer ist, die erste Fahrzeug-UWB-Schnittstelle angesteuert wird zum Versetzen der ersten Fahrzeug-UWB-Schnittstelle in einen nicht sende- und empfangsbereiten Zustand und die zweite Fahrzeug-UWB-Schnittstelle angesteuert wird zum Versetzen der zweiten Fahrzeug-UWB-Schnittstelle aus einem nicht sende- und/oder empfangsbereiten Zustand in einen zumindest empfangsbereiten Zustand.

Gegenwärtig kommerziell verfügbare UWB-Transceiver verfügen in vielen Fällen über verschiedene Betriebsmodi. Bei den vorgesehenen Fahrzeug-UWB-Schnittstellen handelt es sich um derartige Fahrzeug-UWB-Schnittstellen, welche zumindest einen energieaufnahmereduzierten Zustand, einen empfangsbereiten Zustand, einen sendebereiten Zustand sowie bevorzugt auch einen sende- und/oder empfangsbereiten Zustand aufweisen.

Mit dem vorgeschlagenen Authentifizierungssystem wird erreicht, dass in einem Fall, in welchem die Entfernung zwischen ID-Geber und erster Fahrzeug-UWB-Schnittstelle als nicht gering genug angesehen wird bzw. erkannt wird, automatisch die erste Fahrzeug-UWB-Schnittstelle in einen Schlafzustand versetzt wird und die zweite Fahrzeug-UWB-Schnittstelle aktiviert wird, um mit dieser eine wiederholte Laufzeitmessung gemeinsam mit dem ID-Geber zu veranlassen.

Insbesondere kann beispielsweise vorgesehen sein, dass eine Anzahl von wenigstens zwei UWB-Antennen an dem Fahrzeug angeordnet ist, die in Multiplex-Kopplung miteinander gekoppelt sind, und die über eine gemeinsame Sende- und/oder Empfangsschaltung ansteuerbar eingerichtet sind.

Weitere Einzelheiten, Merkmale und Vorteile des Gegenstands der Erfindung ergeben sich aus der nachfolgenden Beschreibung im Zusammenhang mit den Zeichnungen, in denen beispielhafte Ausführungsformen der Erfindung dargestellt sind.

Es versteht sich, dass die vorstehend genannten wie auch die nachfolgend erläuterten Merkmale nicht nur in der jeweils angegebenen Kombination, sondern auch in anderen Kombinationen oder in Alleinstellung verwendbar sind.

Es zeigen:
Fig. 1: eine beispielhafte Ausgestaltung des erfindungsgemäßen Authentifizierungssystems;
Fig. 2: eine Detailansicht des Authentifizierungssystems der Fig. 1.;
Fig. 3: einen beispielhaften Verfahrensablauf, der eine Nutzung des Authentifizierungssystems während eines Authentifizierungsvorgangs repräsentiert;
Fig. 4: einen weiteren beispielhaften Verfahrensablauf, der eine Nutzung des Authentifizierungssystems während eines Authentifizierungsvorgangs repräsentiert.

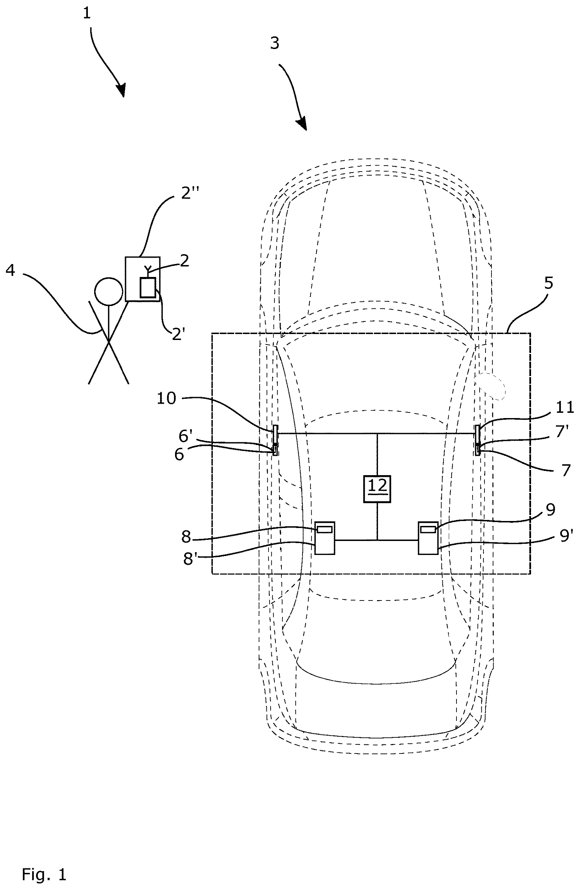

Fig. 1 ist eine beispielhafte Ausgestaltung eines erfindungsgemäßen Authentifizierungssystems 1 zu entnehmen. Das Authentifizierungssystem 1 dient der Authentifizierung eines ID-Gebers 2' gegenüber einem Fahrzeug 3. Fig. 1 zeigt eine Situation, in welcher der ID-Geber 2' sich in Besitz eines Bedieners 4 befindet. Mit dem erfindungsgemäßen

Authentifizierungssystem kann die Authentifizierung des portablen ID-Gebers 2' gegenüber dem Fahrzeug 3 vorgenommen werden, damit der Bediener 4, der den portablen ID-Geber mit sich führt, auf Fahrzeugfunktionen zugreifen kann wie beispielsweise einem Starten des Fahrzeugs 3 oder einem Öffnen einer oder mehrerer der Fahrzeugtüren.

Das Authentifizierungssystem umfasst neben dem portablen ID-Geber 2" mit einer ID-Geber-UWB-Schnittstelle 2', die eine IDgeberseitige UWB-Antenne 2 aufweist, eine fahrzeugseitige Authentifizierungsanordnung 5. Die Authentifizierungsanordnung weist zumindest eine Anzahl von Fahrzeug-UWB-Schnittstellen 6', 7' auf, wobei zumindest eine erste Fahrzeug-UWB-Schnittstelle 6' und eine zweite Fahrzeug-UWB-Schnittstelle 7' vorgesehen sind, die voneinander beabstandet an dem Fahrzeug angeordnet sind. In der gezeigten Ausgestaltung ist die erste UWB-Antenne 6 als integrales Element einer ersten als UWB-Transceiver ausgebildeten Fahrzeug-UWB-Schnittstelle 6' und die zweite UWB-Antenne 7 als integrales Element einer zweiten als UWB-Transceiver ausgebildeten Fahrzeug-UWB-Schnittstelle 7' vorgesehen. Der erste Fahrzeug-UWB-Transceiver 6' ist innerhalb eines Türaußengriffs der Fahrertür, der zweite Fahrzeug-UWB-Transceiver 7' ist innerhalb eines Türaußengriffs der Beifahrertür angeordnet.

Die Authentifizierungsanordnung weist ferner eine erste LF-Schnittstelle 8' mit wenigstens einer ersten LF-Antenne 8 und eine zweite LF-Schnittstelle 9' mit einer zweiten LF-Antenne 9 sowie einen ersten Annäherungssensor 10 und einen zweiten Annäherungssensor 11 auf. Der erste Annäherungssensor 10 ist innerhalb eines Türgriffs der linken Fahrzeugtür angeordnet, während der zweite Annäherungssensor 11 innerhalb des Türgriffs der Beifahrertür angeordnet ist. Sowohl die erste LF-Schnittstelle 8 als auch der erste Annäherungssensor 10 weisen einen geringeren Abstand von der ersten UWB-Antenne 6 als von der zweiten UWB-Antenne 7 auf. Ferner weisen sowohl die zweite LF-Schnittstelle 9 als auch der zweite Annäherungssensor 11 einen geringeren Abstand von der zweiten UWB-Antenne 7 als von der ersten UWB-Antenne 6 auf.

In der gezeigten Ausgestaltung sind die UWB-Transceiver, die LF-Schnittstellen und die Annäherungssensoren mit dem als fahrzeugseitigen Steuergerät 12 ausgebildeten ersten Steuermittel, und über dieses auch miteinander, gekoppelt. Das fahrzeugseitige Steuergerät 12 ist geeignet, als Steuermittel der Authentifizierungsanordnung 5 die einzelnen Bestandteile der Authentifizierungsanordnung 5 zu steuern und zu überwachen, um einen Authentifizierungsvorgang vollständig oder teilweise zu steuern und zu überwachen.

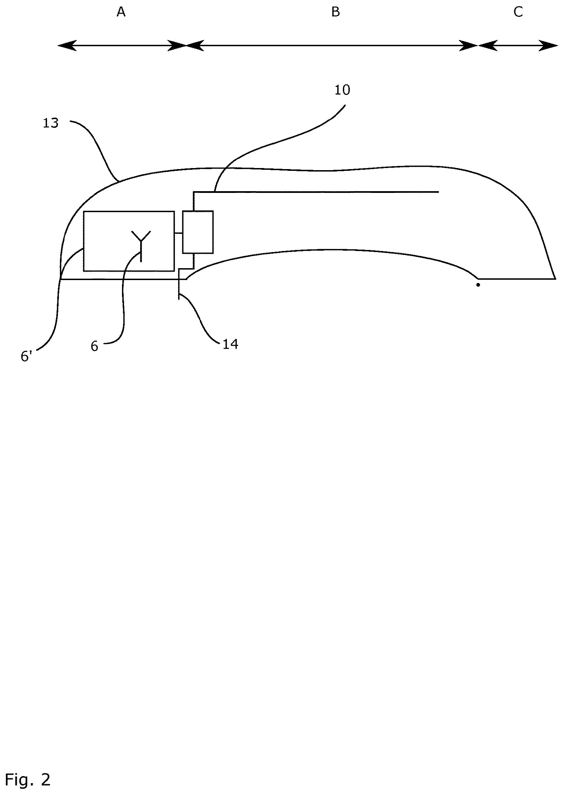

Fig. 2 ist eine Detailansicht des Authentifizierungssystems der Fig. 1 zu entnehmen, nämlich der Türaußengriff 13 der Fahrertür. Der Türaußengriff 13 weist entlang seiner Längserstreckung einen Scharnierbereich A, einen Greifbereich B und einen Schwenkbereich C auf. Die erste Fahrzeug-UWB-Schnittstelle 6' und mit ihr deren Antenne 6 ist in dem Scharnierbereich A des Türaußengriffs 13 angeordnet, sodass der Greifbereich B umgriffen werden kann, ohne dass eine signifikante Beeinträchtigung der Abstrahlcharakteristik der Antenne 6 zu erwarten ist. Ferner ist der als kapazitiver Sensor ausgebildete erste Näherungssensor 10 in dem Türaußengriff 13 angeordnet. Der erste Näherungssensor 10 und die erste Fahrzeug-UWB-Schnittstelle 6' sind über einen Kabelstrang 14 mit dem fahrzeugseitigen Steuergerät 12 gekoppelt.

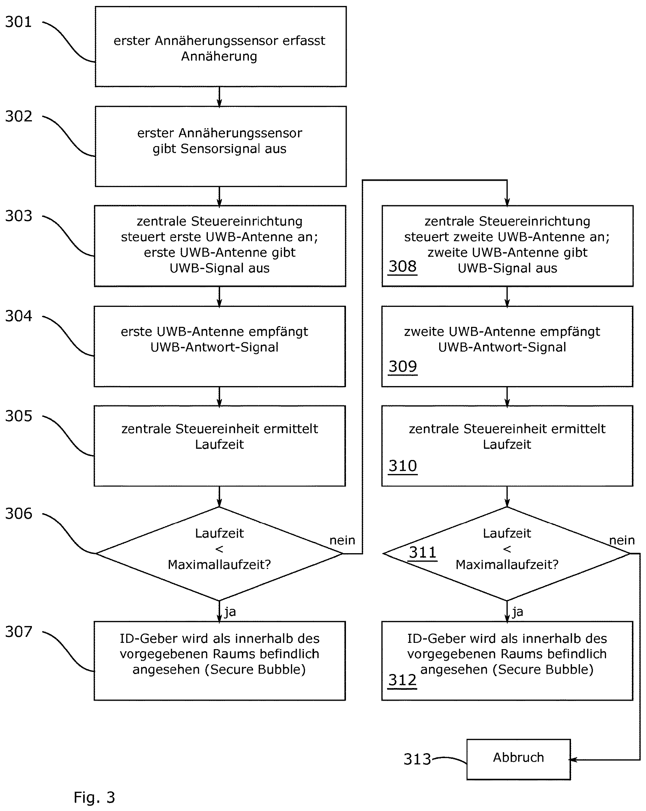

Fig. 3 ist eine erste mögliche Verfahrensführung zu entnehmen.

Die Verfahrensführung sieht vor, dass in einem Schritt 301 die Annäherung eines Bedieners an den ersten Annäherungssensor festgestellt wird. Der Annäherungssensor gibt in Schritt 302 ein entsprechendes Annäherungssignal aus. Dadurch, dass der erste Annäherungssensor und die Antenne der ersten Fahrzeug-UWB-Schnittstelle in dem Türgriff angeordnet sind und miteinander gekoppelt sind, ist vorgesehen, dass das erste Steuermittel die erste UWB-Antenne aus einem nicht sende- und/oder empfangsbereiten Zustand in einen sendebereiten Zustand versetzt (Schritt 303). Die erste UWB-Antenne sendet ein erstes UWB-Signal an den ID-Geber (Schritt 303). Das UWB-Signal wird sodann von einem UWB-Transceiver des ID-Gebers empfangen und mit einem ersten UWB-Antwortsignal beantwortet. Das Signal wird in Schritt 304 von der ersten UWB-Antenne empfangen. Unter Einbeziehung der fahrzeugseitigen Steuereinrichtung wird die Laufzeit ermittelt, welche das UWB-Signal auf dem Hinweg zum ID-Geber, und das UWB-Signal auf dem Rückweg zum ID-Geber benötigt hat, wobei eine entsprechende Berechnungszeit innerhalb des ID-Gebers der Steuereinrichtung bekannt ist und dadurch aus der tatsächlich erfassten Zeitdauer heraus gerechnet werden kann. In dem Schritt 305 wird die Laufzeit von der zentralen Steuereinrichtung berechnet und in Schritt 306 wird geprüft, ob die Laufzeit des UWB-Signals kleiner ist als eine vorgegebene Maximallaufzeit. Wenn dies der Fall ist, gilt der ID-Geber als innerhalb des Raums befindlich, in dem eine Freigabe ermöglicht wird (Secure Bubble). Ferner gilt eine Kompromittierung des Signals, beispielsweise durch eine Relay-Station-Attacke, als nicht erfolgt. Wenn hingegen in Schritt 306 festgestellt wird, dass die Laufzeit größer ist als die vorgegebene Maximallaufzeit, wird mit Schritt 308 die Verfahrensfolge analog, jedoch unter Verwendung der zweiten UWB-Antenne fortgesetzt.

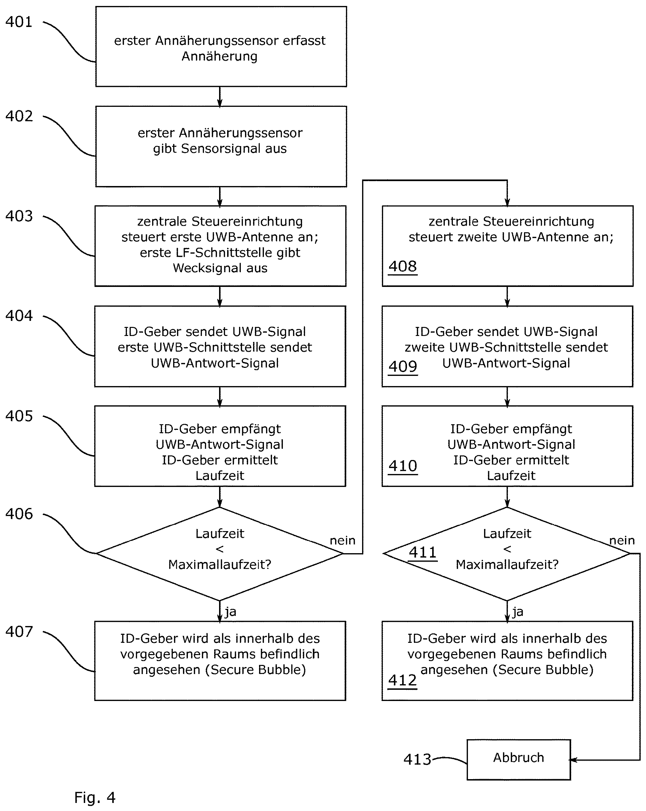

Der Fig. 4 zu entnehmende Verfahrenslauf unterscheidet sich von dem in Fig. 3 dargestellten Verfahrenslauf dadurch, dass in Reaktion auf erfasste Annäherung (Schritt 401) und ausgegebenes Sensorsignal (Schritt 402) ein LF-Wecksignal ausgegeben wird (Schritt 403) sowie das erste Steuermittel die erste Fahrzeug-UWB-Schnittstelle ansteuert zum Versetzen der ersten Fahrzeug-UWB-Schnittstelle aus einem nicht sende- und/oder empfangsbereiten Zustand in einen zumindest empfangsbereiten Zustand. Die erste Fahrzeug-UWB-Schnittstelle empfängt ein von dem ID-Geber ausgesendetes UWB-Signal und beantwortet es mit einem UWB-Antwortsignal (Schritt 404). Der ID-Geber empfängt das Antwort-Signal und ermittelt eine Laufzeit des UWB-Signals und des UWB-Antwortsignals zwischen ID-Geber und erster Fahrzeug-UWB-Schnittstelle. Die Laufzeit oder einen aus ihr abgeleiteten Parameter übermittelt der ID-Geber mittels einer Funkeinrichtung an einen Datenempfänger des Fahrzeugs (Schritt 405). Nach Erfassen der Laufzeit des UWB-Signals zwischen der ID-Geber-Schnittstelle und der ersten Fahrzeug-UWB-Schnittstelle prüft der ID-Geber, ob die Laufzeit des UWB-Signals kleiner ist als eine vorgegebene Maximallaufzeit. Wenn dies nicht der Fall ist, gibt der ID-Geber ein entsprechendes Signal an die zentrale Steuereinrichtung aus, welche die erste Fahrzeug-UWB-Schnittstelle in einen nicht sende- und empfangsbereiten Zustand versetzt und die zweite Fahrzeug-UWB-Schnittstelle ansteuert, sodass die Schritte 404 bis 407 in den Schritten 408 bis 412 in analoger Weise mit der zweiten Fahrzeug-UWB-Schnittstelle wiederholt werden.

## Patentansprüche

1. Authentifizierungssystem (1) eines eine Blechummantelung aufweisenden Fahrzeugs (3) zur Authentifizierung eines portablen ID-Gebers (2'') gegenüber dem Fahrzeug (3) zur Freigabe von Fahrzeugfunktionen für einen Bediener (4), der den portablen ID-Geber (2'') mit sich führt,
wobei das Authentifizierungssystem (1) den portablen ID-Geber (2") und eine fahrzeugseitige Authentifizierungsanordnung (5) aufweist, wobei der portable ID-Geber (2'') wenigstens eine erste ID-Geber-UWB-Schnittstelle (2') und die Authentifizierungsanordnung (5) wenigstens eine erste Fahrzeug-UWB-Schnittstelle (6') und eine zweite Fahrzeug-UWB-Schnittstelle (7') aufweist, die voneinander beabstandet an dem Fahrzeug (3) angeordnet sind, wobei Beabstandung der ersten Fahrzeug-UWB-Schnittstelle von der zweiten Fahrzeug-UWB-Schnittstelle als der Abstand zwischen einer UWB-Antenne der ersten Fahrzeug-UWB-Schnittstelle und einer UWB-Antenne der zweiten Fahrzeug-UWB-Schnittstelle zu verstehen ist, und wobei die erste ID-Geber-UWB-Schnittstelle (2') und die Fahrzeug-UWB-Schnittstellen (6', 7') zur UWB-Kommunikation miteinander eingerichtet sind, und
wobei zumindest die Antenne (6) der ersten Fahrzeug-UWB-Schnittstelle (6') außerhalb der Blechummantelung des Fahrzeugs (3) angeordnet ist,
wobei die erste Fahrzeug-UWB-Schnittstelle (6') mit einem ersten Näherungssensor (10) gekoppelt ist, wobei die erste Fahrzeug-UWB-Schnittstelle (6') und der erste Näherungssensor (10) mit einem ersten Steuermittel (12) gekoppelt sind, das eingerichtet ist, die erste Fahrzeug-UWB-Schnittstelle (6') anzusteuern und in einen kommunikationsbereiten Modus zu versetzen, nachdem der erste Näherungssensor (10) eine Annäherung eines Bedieners (4) festgestellt hat und
wobei die zweite Fahrzeug-UWB-Schnittstelle (7') mit einem zweiten Näherungssensor (11) gekoppelt ist, wobei die zweite Fahrzeug-UWB-Schnittstelle (7') und der zweite Näherungssensor (11) mit dem ersten Steuermittel (12) und/oder mit einem zweiten Steuermittel gekoppelt sind, das eingerichtet ist, die zweite Fahrzeug-UWB-Schnittstelle (7') anzusteuern und in einen kommunikationsbereiten Modus zu versetzen, nachdem der zweite Näherungssensor (11) eine Annäherung des Bedieners (4) festgestellt hat,
wobei die erste Fahrzeug-UWB-Schnittstelle (6') und die zweite Fahrzeug-UWB-Schnittstelle (7') mit einem zentralen Steuermittel (12) gekoppelt sind und/oder dass das erste Steuermittel (12) als zentrales Steuermittel ausgebildet ist, welches eingerichtet ist,
nach Erfassen der Laufzeit des UWB-Signals zwischen der ID-Geber-Schnittstelle (2') und der ersten Fahrzeug-UWB-Schnittstelle (6') mittels des ersten Steuermittels (12) oder mittels des ID-Gebers (2'') zu prüfen, ob die Laufzeit des UWB-Signals kleiner ist als eine vorgegebene Maximallaufzeit, welche eine Position des ID-Gebers innerhalb eines vorgegebenen Raums repräsentiert, der die erste Fahrzeug-UWB-Schnittstelle umgibt, und, wenn die Laufzeit größer ist, für eine vorgegebene Anzahl von Wiederholungen und in einer vorgegebenen Anzahl von Zeitfolgen wiederholt die erste Fahrzeug-UWB-Schnittstelle anzusteuern, ein UWB-Signal auszugeben zur wiederholten Laufzeiterfassung zwischen der ID-Geber-Schnittstelle (2') und der ersten Fahrzeug-UWB-Schnittstelle (6'), und
wenn die vorgegebene Anzahl von Wiederholungen erfolgt ist, die zweite Fahrzeug-UWB-Schnittstelle (7') anzusteuern, ein UWB-Signal auszugeben zur Kommunikation der zweiten Fahrzeug-UWB-Schnittstelle (7') mit der ID-Geber-UWB-Schnittstelle (2') zur Laufzeiterfassung zwischen der ID-Geber-UWB-Schnittstelle (2') und der zweiten Fahrzeug-UWB-Schnittstelle (7').

2. Authentifizierungssystem nach Anspruch 1, **dadurch gekennzeichnet, dass** die Antenne (6) der ersten Fahrzeug-UWB-Schnittstelle (6') in einer Dachfinne oder in einem Seitenspiegel angeordnet ist.

3. Authentifizierungssystem nach Anspruch 1, **dadurch gekennzeichnet, dass** die Antenne (6) der ersten Fahrzeug-UWB-Schnittstelle (6') an einem Türaußengriff (13) oder innerhalb eines Türaußengriffs (13) angeordnet ist.

4. Authentifizierungssystem nach Anspruch 3, **dadurch gekennzeichnet, dass** der Türaußengriff (13) entlang seiner Längserstreckung
einen Scharnierbereich (A) aufweist, in dem der Türaußengriff mit einer Seitentür des Fahrzeugs (3) schwenkverbunden ist;
einen Greifbereich (B) aufweist, der zum Hintergreifen des Türaußengriffs (13) durch den Bediener (4) ausgebildet ist und
einen Schwenkbereich (C) aufweist,
wobei die Antenne (6) der ersten Fahrzeug-UWB-Schnittstelle (6') in dem Scharnierbereich (A) oder in dem Schwenkbereich (C) angeordnet ist zur Vermeidung eines Abschattens von Sende- und/oder Empfangsaktivitäten der Antenne (6') der ersten Fahrzeug-UWB-Schnittstelle (6) durch Hintergreifen des Bedieners (4) bei Betätigen des Türaußengriffs (13).

5. Authentifizierungssystem (1) nach Anspruch 3 oder nach Anspruch 4, **dadurch gekennzeichnet, dass** die erste Fahrzeug-UWB-Schnittstelle (6') als UWB-Transceiver ausgebildet ist, der in dem Türaußengriff (13) angeordnet ist, wobei die erste Fahrzeug-UWB-Schnittstelle (6') mit einem ersten Näherungssensor (10) gekoppelt ist, wobei die erste Fahrzeug-UWB-Schnittstelle (6') und der erste Näherungssensor (10) mit einem ersten Steuermittel (12) gekoppelt sind, das eingerichtet ist, die erste Fahrzeug-UWB-Schnittstelle (6') anzusteuern und in einen kommunikationsbereiten Modus zu versetzen, nachdem der Näherungssensor (10) eine Annäherung eines Bedieners (4) festgestellt hat.

6. Authentifizierungssystem nach einem der vorhergehenden Ansprüche, **dadurch gekennzeichnet, dass** der erste Näherungssensor (10) innerhalb des Türgriffs (13) angeordnet ist.

7. Authentifizierungssystem nach einem der vorhergehenden Ansprüche, **dadurch gekennzeichnet, dass** der erste Näherungssensor (10) einen NFC-Sensor, einen kapazitiven Sensor und/oder einen induktiven Schalter aufweist.

8. Authentifizierungssystem (1) nach einem der vorhergehenden Ansprüche, **dadurch gekennzeichnet, dass**
das mit der ersten Fahrzeug-UWB-Schnittstelle (6') gekoppelte erste Steuermittel (12) eingerichtet ist, nach Feststellen des Annäherns eines Bedieners (4) an den ersten Annäherungssensor (10) die erste Fahrzeug-UWB-Schnittstelle (6') anzusteuern, ein UWB-Signal auszugeben zur UWB-Kommunikation mit der ID-Geber-Schnittstelle (2'), die dem ersten Steuermittel (12) bekannt ist, und nach Empfang eines in Reaktion erhaltenen UWB-Signals der ID-Geber-Schnittstelle (2') eine Laufzeit des UWB-Signals zwischen der ID-Geber-Schnittstelle (2') und der Antenne (6) der ersten Fahrzeug-UWB-Schnittstelle (6') zu erfassen, und dass
das mit der zweiten Fahrzeug-UWB-Schnittstelle (7') gekoppelte Steuermittel (12) eingerichtet ist, nach Feststellen des Annäherns eines Bedieners (4) an den zweiten Annäherungssensor (11) die zweite Fahrzeug-UWB-Schnittstelle (7') anzusteuern, ein UWB-Signal auszugeben zur UWB-Kommunikation mit der ID-Geber-Schnittstelle (2'), die dem Steuermittel (12) bekannt ist, und nach Empfang eines in Reaktion erhaltenen UWB-Signals der ID-Geber-Schnittstelle (2') eine Laufzeit des UWB-Signals zwischen der ID-Geber-Schnittstelle (22') und einer Antenne (7) der zweiten Fahrzeug-UWB-Schnittstelle (7') zu erfassen.

## Claims

1. Authentication system (1) of a vehicle (3) having a sheet metal casing for authenticating a portable ID transponder (2'') with respect to the vehicle (3) for enabling vehicle functions for an operator (4) carrying the portable ID transponder (2''),
wherein the authentication system (1) comprises the portable ID transponder (2'') and a vehicle-side authentication arrangement (5), wherein the portable ID transponder (2'') comprises at least a first ID transponder UWB interface (2') and the authentication arrangement (5) comprises at least a first vehicle UWB interface (6') and a second vehicle UWB interface (7') which are arranged at a distance from one another on the vehicle (3), wherein a distance of the first vehicle UWB interface from the second vehicle UWB interface is to be understood as the distance between a UWB antenna of the first vehicle UWB interface and a UWB antenna of the second vehicle UWB interface, and the first ID transmitter UWB interface (2') and the vehicle UWB interfaces (6', 7') being set up for UWB communication with one another,
wherein at least the antenna (6) of the first vehicle UWB interface (6') is arranged outside the sheet metal casing of the vehicle (3),
wherein the first vehicle UWB interface (6') is coupled to a first proximity sensor (10), wherein the first vehicle UWB interface (6') and the first proximity sensor (10) are coupled to a first control means (12) which is arranged to control the first vehicle UWB interface (6') and to put it into a communication-ready mode after the first proximity sensor (10) has detected an approach of an operator (4),
wherein the second vehicle UWB interface (7') is coupled to a second proximity sensor (11), wherein the second vehicle UWB interface (7') and the second proximity sensor (11) are coupled to the first control means (12) and/or to a second control means which is arranged to control the second vehicle UWB interface (7') and to put it into a communication-ready mode after the second proximity sensor (11) has detected an approach of the operator (4),
wherein the first vehicle UWB interface (6') and the second vehicle UWB interface (7') are coupled to a central control means (12) and/or that the first control means (12) is designed as a central control means which is set up to check, after detecting the propagation time of the UWB signal between the ID transponder interface (2') and the first vehicle UWB interface (6') by means of the first control means (12) or by means of the ID transponder (2''), whether the propagation time of the UWB signal is smaller than a predetermined maximum propagation time representing a position of the ID transponder within a predetermined space surrounding the first vehicle UWB interface, and, if the propagation time is greater, repeatedly controlling the first vehicle UWB interface for a predetermined number of repetitions and in a predetermined number of time sequences, to output a UWB signal for repeated propagation time detection between the ID transponder interface (2') and the first vehicle UWB interface (6'); and
when the predetermined number of repetitions has been made, to control the second vehicle UWB interface (7'), to output a UWB signal for communication of the second vehicle UWB interface (7') with the ID transponder UWB interface (2') for runtime detection between the ID transponder UWB interface (2') and the second vehicle UWB interface (7').

2. Authentication system according to claim 1, **characterized in that** the antenna (6) of the first vehicle UWB interface (6') is arranged in a roof fin or in a side mirror.

3. Authentication system according to claim 1, **characterized in that** the antenna (6) of the first vehicle UWB interface (6') is arranged on a door outer handle (13) or inside a door outer handle (13).

4. Authentication system according to claim 3, **characterized in that** the outer door handle (13) comprises a hinge region (A) along its longitudinal extent in which the outer door handle is pivotally connected to a side door of the vehicle (3);
has a gripping region (B) which is designed for the operator (4) to grip behind the external door handle (13), and
has a swivel range (C),
wherein the antenna (6) of the first vehicle UWB interface (6') is arranged in the hinge region (A) or in the swivel region (C) in order to avoid shadowing of transmission and/or reception activities of the antenna (6') of the first vehicle UWB interface (6) by gripping behind the operator (4) when the external door handle (13) is actuated.

5. Authentication system (1) according to claim 3 or to claim 4, **characterized in that** the first vehicle UWB interface (6') is configured as a UWB transceiver arranged in the exterior door handle (13), wherein the first vehicle UWB interface (6') is coupled to a first proximity sensor (10), wherein the first vehicle UWB interface (6') and the first proximity sensor (10) are coupled to a first control means (12) which is arranged to control the first vehicle UWB interface (6') and to put it into a communication-ready mode after the proximity sensor (10) has detected an approach of an operator (4).

6. Authentication system according to any one of the preceding claims, **characterized in that** the first proximity sensor (10) is arranged within the door handle (13).

7. Authentication system according to any one of the preceding claims, **characterized in that** the first proximity sensor (10) comprises an NFC sensor, a capacitive sensor and/or an inductive switch.

8. Authentication system (1) according to any one of the preceding claims, **characterized in that**
the first control means (12) coupled to the first vehicle UWB interface (6') is adapted to control the first vehicle UWB interface (6'), after detecting the approach of an operator (4) to the first proximity sensor (10), to output a UWB signal for UWB communication with the ID transmitter interface (2'), known to the first control means (12), and after receiving a UWB signal of the ID transponder interface (2') obtained in response, to detect a propagation time of the UWB signal between the ID transponder interface (2') and the antenna (6) of the first vehicle UWB interface (6'),
and **in that** the control means (12) coupled to the second vehicle UWB interface (7') is adapted to control, after detecting the approach of an operator (4) to the second proximity sensor (11), the second vehicle UWB interface (7') to output a UWB signal for UWB communication with the ID transmitter interface (2'), known to the control means (12), and after receiving a UWB signal of the ID transponder interface (2') obtained in response, to detect a propagation time of the UWB signal between the ID transponder interface (22') and an antenna (7) of the second vehicle UWB interface (7').

## Revendications

1. Système d'authentification (1) d'un véhicule (3) ayant une enveloppe en tôle pour authentifier un émetteur d'identification portable (2'') par rapport au véhicule (3) pour permettre des fonctions de véhicule pour un opérateur (4) portant l'émetteur d'identification portable (2''),
dans lequel le système d'authentification (1) comprend l'émetteur d'identification portable (2'') et un dispositif d'authentification côté véhicule (5), dans lequel le transpondeur d'identification portable (2'') comprend au moins une première interface UWB d'émetteur d'identification (2') et le dispositif d'authentification (5) comprend au moins une première interface UWB de véhicule (6') et une deuxième interface UWB de véhicule (7') qui sont disposés à distance les uns des autres sur le véhicule (3), une distance de la première interface UWB de véhicule par rapport à la deuxième interface UWB de véhicule devant être compris comme la distance entre une antenne UWB de la première interface UWB de véhicule et une antenne UWB de la deuxième interface UWB de véhicule, et la première interface UWB d'émetteur d'identification (2') et les interfaces UWB de véhicule (6', 7') étant configurées pour une communication UWB entre elles, et
dans lequel au moins l'antenne (6) de la première interface UWB de véhicule (6') est disposée à l'extérieur de l'enveloppe en tôle du véhicule (3),
dans lequel la première interface UWB de véhicule (6') est couplée à un premier capteur de proximité (10), dans lequel la première interface UWB de véhicule (6') et le premier capteur de proximité (10) sont couplés à un premier moyen de commande (12) qui est agencé pour commander la première interface UWB de véhicule (6') et pour la mettre dans un mode prêt à la communication après que le premier capteur de proximité (10) a détecté une approche d'un opérateur (4), et
dans lequel la seconde interface UWB de véhicule (7') est couplée à un second capteur de proximité (11), dans lequel la seconde interface UWB de véhicule (7') et le second capteur de proximité (11) sont couplés au premier moyen de commande (12) et/ou à un second moyen de commande qui est agencé pour commander la seconde interface UWB de véhicule (7') et pour la mettre dans un mode prêt à communiquer après que le second capteur de proximité (11) a détecté une approche de l'opérateur (4),
dans lequel la première interface UWB de véhicule (6') et la deuxième interface UWB de véhicule (7') sont couplées à un moyen de commande central (12) et/ou en ce que le premier moyen de commande (12) est conçu comme un moyen de commande central mis en place,
après avoir détecté le temps de propagation du signal UWB entre l'interface du transpondeur d'identification (2') et la première interface UWB du véhicule (6') au moyen du premier moyen de commande (12) ou au moyen du transpondeur d'identification (2''), vérifier si le temps de propagation du signal UWB est inférieur à un temps de propagation maximal prédéterminé représentant une position du transpondeur d'identification dans un espace prédéterminé entourer la première interface UWB du véhicule et, si le temps de propagation est supérieur, commander de manière répétée la première interface UWB du véhicule pendant un nombre prédéterminé de répétitions et dans un nombre prédéterminé de séquences temporelles, délivrer un signal UWB pour la détection du temps de propagation répété entre l'interface du transducteur d'identification (2') et la première interface UWB du véhicule (6') ; et
lorsque le nombre prédéterminé de répétitions s'est produit, commander à la seconde interface UWB de véhicule (7') de sortir un signal UWB pour la communication de la seconde interface UWB de véhicule (7') avec l'interface UWB de transpondeur d'identification (2') pour la détection de temps de fonctionnement entre l'interface UWB de transpondeur d'identification (2') et la seconde interface UWB de véhicule (7').

2. Système d'authentification selon la revendication 1, **caractérisé en ce que** l'antenne (6) de la première interface UWB du véhicule (6') est disposée dans une ailette de toit ou dans un miroir latéral.

3. Système d'authentification selon la revendication 1, **caractérisé en ce que** l'antenne (6) de la première interface UWB du véhicule (6') est disposée sur ou à l'intérieur d'une poignée de porte extérieure (13).

4. Système d'authentification selon la revendication 3, **caractérisé en ce que** la poignée extérieure de porte (13), le long de son extension longitudinale,
présente une zone de charnière (A) dans laquelle la poignée de porte extérieure est reliée de manière pivotante à une porte latérale du véhicule (3) ;
présente une zone de préhension (B) qui est conçue pour que l'opérateur (4) puisse la saisir derrière la poignée extérieure de la porte (13), et
a une plage de pivotement (C),
dans lequel l'antenne (6) de la première interface UWB de véhicule (6') est disposée dans la zone de charnière (A) ou dans la zone de pivotement (C) afin d'éviter l'ombrage des activités d'émission et/ou de réception de l'antenne (6') de la première interface UWB de véhicule (6) par une prise derrière l'opérateur (4) lorsque la poignée extérieure de porte (13) est actionnée.

5. Système d'authentification (1) selon la revendication 3 ou la revendication 4, **caractérisé en ce que** la première interface UWB de véhicule (6') est conçue comme un émetteur-récepteur UWB disposé dans la poignée extérieure de porte (13), la première interface UWB de véhicule (6') étant couplée à un premier capteur de proximité (10), dans lequel la première interface UWB de véhicule (6') et le premier capteur de proximité (10) sont couplés à un premier moyen de commande (12) qui est agencé pour commander la première interface UWB de véhicule (6') et pour la mettre dans un mode prêt à communiquer après que le capteur de proximité (10) a détecté une approche d'un opérateur (4).

6. Système d'authentification selon l'une quelconque des revendications précédentes, **caractérisé en ce que** le premier capteur de proximité (10) est disposé à l'intérieur de la poignée de porte (13).

7. Système d'authentification selon l'une quelconque des revendications précédentes, **caractérisé en ce que** le premier capteur de proximité (10) comprend un capteur NFC, un capteur capacitif et/ou un commutateur inductif.

8. Système d'authentification (1) selon l'une des revendications précédentes, **caractérisé en ce que**
le premier moyen de commande (12) couplé à la première interface UWB de véhicule (6') est agencé pour commander la première interface UWB de véhicule (6'), après détection de l'approche d'un opérateur (4) vers le premier capteur de proximité (10), afin de sortir un signal UWB pour une communication UWB avec l'interface d'émetteur d'identification (2'), connu du premier moyen de commande (12), et après réception d'un signal UWB de l'interface de transpondeur d'identification (2') obtenu en réponse, détecter un temps de propagation du signal UWB entre l'interface de transpondeur d'identification (2') et l'antenne (6) de la première interface UWB de véhicule (6'), et que
le moyen de commande (12) couplé à la seconde interface UWB de véhicule (7') est agencé pour commander la seconde interface UWB de véhicule (7'), après détection de l'approche d'un opérateur (4) vers le second capteur de proximité (11), afin de sortir un signal UWB pour une communication UWB avec l'interface d'émetteur d'identification (2'), connu des moyens de commande (12), et après réception d'un signal UWB de l'interface de transpondeur d'identification (2') obtenu en réponse, détection d'un temps de propagation du signal UWB entre l'interface de transpondeur d'identification (22') et une antenne (7) de la seconde interface UWB de véhicule (7').
